# DEMANDE DE BREVET EUROPEEN

(11) **EP 0 581 756 A2**
(43) Date de publication de la demande: **02.02.1994**
(21) Numéro de dépôt: 93870158.8
(22) Date de dépôt: 29.07.1993
(51) Int. Cl.: D04H 1/00, B01J 20/28

(54) **Procédé d'absorption de liquide ou vapeur sur supports métalliques ou non métalliques**

(30) Priorité: 29.07.1992 BE 9200688
(71) Demandeur: LUXMETALL S.A., B-6690 Vielsalm (BE)
(72) Inventeur: Donis, José, B-4780 St-Vith (BE)
(74) Mandataire: Vanderperre, Robert

(57) **Abrégé**

Le procédé consiste à appliquer sur le support, au moyen d'une colle, un produit à base de fibres de polyester non-tissées contenant ± 50 % de microsphères liées aux fibres, connu sous le nom de Firet Coremat XW2.

## Description

La présente invention est relative à l'absorption de liquide ou de vapeur, telle que de l'eau de condensation, sur un support métallique ou non métallique, tel que tôle plane ou profilée en aluminium, en PVC, en stratifié, etc.

Le procédé suivant l'invention est destiné aussi à servir d'isolation simple, acoustique ou thermique.

On connaît un produit, dénommé Firet Coremat XW2, à base de fibres de polyester non-tissées contenant ± 50 % de microsphères liées aux fibres. Les microsphères, de diamètre 40 µm, réagissent comme de petites boules de caoutchouc sous pression. Elles sont entièrement résistantes aux produits chimiques et, une fois enrobées dans une résine polyester, elles résistent à des températures très élevées de l'ordre de 180° C. Lorsque la résine a durci, le noyau stratifié est dur comme du roc ; il est cependant très léger et présente ainsi des propriétés exceptionnelles.

Un tel produit est actuellement utilisé pour le renforcement de panneaux, pour la rigidité des coques de bateaux, de carosseries de voitures, de carénages de véhicules et d'appareil en tous genres.

Pour réaliser le but de l'invention il a paru avantageux de créer un procédé consistant à appliquer au moyen de colle sur un support à hydrofuger et/ou isoler le produit connu sous le nom de Firet Coremat XW2.

Suivant l'invention on utilise de la colle Hotmelt, possédant au départ un caractère autocollant et servant à la mise en place du non-tissé.

On utilise également, suivant l'invention, de la colle constituée de deux composants polyuréthane du type ICEMA R141/40 RV B10 accélérée. Cette colle ne s'imbibe pas dans le non-tissé et sert à maintenir le non-tissé en place dans le temps. Elle résiste à l'humidité et aux différences de températures dues aux conditions atmosphériques.

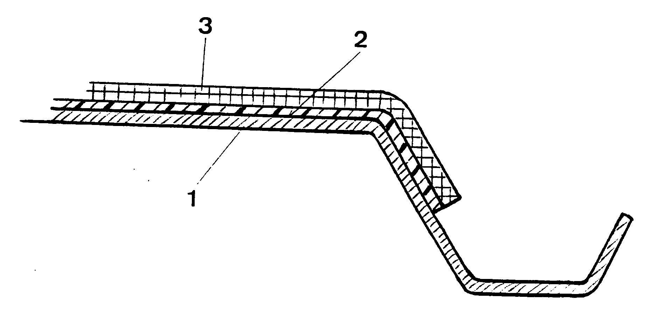

On a représenté au dessin annexé, à titre d'exemple uniquement, un schéma d'application du procédé suivant l'invention.

Sur une tôle profilée 1 on a appliqué, au moyen d'une colle 2, le produit 3 connu sous le nom de Firet Coremat XW2.

Des tests effectués au Frauenhofer Institut für Bauphysik de l'Université de Stuttgart ont prouvé la qualité du procédé d'absorber une grande quantité d'eau. On peut citer à titre d'exemple 873 gr/m2 sur surfaces planes et 1057 gr/m2 sur tôles profilées.

L'invention concerne l'utilisation nouvelle d'un feutre de polyester connu par le document EP-A-0190788 mais utilisé jusqu'à ce jour pour un tout autre but.

Le feutre contient environ 50% de microsphères liées aux fibres. Il est connu sous le nom de Firet Coremat XW2.

Suivant l'invention, le feutre est fixé sur un support à l'aide d'une colle spécifique constituée de deux composants polyuréthane du type ICEMA ® 141/40 RV B10 accélérée appliquée à raison de 100g/M² environ. Ce feutre est utilisé en vue d'absorber plus particulièrement de l'eau, de la vapeur d'eau ou l'humidité ambiante.

Suivant l'invention on fait subir au produit un traitement antifongique.

## Revendications

1. Procédé d'absorption de liquide ou vapeur sur supports métalliques ou non métalliques et d'isolation, caractérisé en ce qu'il consiste à appliquer sur le support, au moyen d'une colle, un produit à base de fibres de polyester non-tissées contenant ± 50 % de microsphères liées aux fibres, connu sous le nom de Firet Coremat XW2.

2. Procédé suivant la revendication 1, caractérisé en ce que la colle utilisée est connue sous le nom de Hotmelt.

3. Procédé suivant la revendication 1, caractérisé en ce que la colle utilisée est constituée de deux composants polyuréthane du type ICEMA R 141/40 RV B10 accélérée.

4. Procédé suivant une ou plusieurs des revendications 1 à 3, caractérisé en ce qu'il comporte un traitement antifongique.

5. Utilisation d'un feutre de polyester contenant ± 50% de microsphères liées aux fibres, connu sous le nom de Firet Coremat XW2, caractérisée en ce que le feutre est fixé sur un support à l'aide d'une colle spécifique constituée de deux composants polyuréthane du type ICEMA R 141/40 RV B10 accélérée appliquée à raison de 100g/m² environ, en vue d'absorber l'humidité ambiante.
